# EUROPEAN PATENT APPLICATION

(11) **EP 2 682 220 A1**
(43) Date of publication of application: **08.01.2014**
(21) Application number: 12752393.4
(22) Date of filing: 28.02.2012
(51) Int. Cl.: B23K 35/363

(54) **FLUX**

(30) Priority: 02.03.2011 JP 2011045777
(71) Applicant: Senju Metal Industry Co., Ltd, Tokyo 120-8555 (JP)
(72) Inventor: OKADA Sakie, Tokyo 120-8555 (JP); KOROKI Motoki, Tokyo 120-8555 (JP); ISEKI Hiroaki, Tokyo 120-8555 (JP); ITOYAMA Taro, Tokyo 120-8555 (JP)
(74) Representative: Ealey, Douglas Ralph
(86) International application number: PCT/JP2012/054930
(87) International publication number: WO 2012/118076

(57) **Abstract**

To provide flux which has a property of suppression of sedimentation of the solder powder, dissolves by heating at the time of the soldering to remain no residue and does not block any wettability of the solder.

In the flux which is mixed with solder powder to produce the solder paste, an amount of methacrylate polymer which suppresses of sedimentation of the solder powder at a normal temperature range and dissolves or vaporizes during a heating course at the time of the soldering. As the methacrylate polymer, polyalkyl methacrylate having an alkyl group is preferable and it is preferable that an addition amount of polyalkyl methacrylate is not less than 0.1 mass% through less than 1.0 mass%. It is also preferable to contain further a solvent having at least three OH groups.

## Description

### [TECHNICAL FIELD]

The present invention relates to flux which is mixed with solder powder and it more specifically, relates to the flux which can prevent the solder powder from being settled and can realize no residue.

### [BACKGROUND]

The flux used for soldering generally has an efficacy such that metallic oxides on the solder and a metallic surface of the subject to be soldered are chemically removed at a temperature in which the solder is melted and metallic elements can be shifted across a boundary of both. By using the flux, any intermetallic compounds can be formed between the solder and the metallic surface of the subject to be soldered so that they can be strongly connected.

The solder paste is a composite material that is formed by mixing the solder powder and the flux. The solder paste is applied to a portion, electrodes, terminals and the like, to be soldered of a board such as a printed circuit board by means of a printing method or a discharge method. Any components are mounted on the soldered portion thereof to which the solder paste is applied. The soldering is performed so that the board is heated in a heating furnace called as "reflow furnace" to fuse the solder.

Rosin for removing oxide film on the metallic surface; thixotropic agent having antisettling effect for suppressing separation and sedimentation of the solder powder after the solder powder and the flux are mixed in a uniform way, based on a difference between their specific gravity, and allowing the viscosity of solder paste to be maintained suitable state; activator for allowing washing capability and wettability to be improved; solvent having any solubility to solid contents such as rosin and the like are added to the flux used in the solder paste.

The above-mentioned components of flux, particularly, the thixotropic agent contains any indissoluble and/or no evaporable components based on the heating by means of the soldering so that they remain around a portion to be soldered as residue of flux after the soldering.

In electronic devices to be mounted on a vehicle, any coating by resin materials may be performed around the soldered portions in the board or the whole of the board after the soldering in order not to damage any functions of the board by any influence of water and/or dust to maintain reliability.

In this moment, if the residue of flux after the soldering remains on the soldered portions, resin coating material and the residue of flux may be mixed to block the curing of the resin coating material depending on a compatibility of the resin coating material and the residue of flux so that the curing of the resin coating material on a boundary between the resin coating material and the residue of flux may become insufficient. When leaving it with the curing of the resin coating material being insufficient, any problem arises such that insulation resistance between the electrodes deteriorates, which exerts a bad influence on the reliability after the soldering.

As solution strategies thereof, an optimal combination has been previously studied after the compatibility of the resin coating material and the residue of flux has been confirmed or a way of washing and removing the residue of flux which blocks the curing of the resin has been previously taken. However, these solution strategies, both, require any costs and time.

Accordingly, the solder paste in which the flux having components that remains no substantial residue of flux after the soldering is mixed has been proposed (For example, see Patent Document 1).

### [DOCUMENTS FOR PRIOR ART]

### [PATENT DOCUMENTS]

Patent Document 1: Japanese Patent Application Publication No. 2004-25305

### [SUMMARY OF THE INVENTION]

### [PROBLEMS TO BE SOLVED BY THE INVENTION]

When performing the coating by any resin without washing the board after the soldering, in order not to block curing of the resin material around the boundary between it and the residue of flux, it is necessary to make zero a residual amount of the residue of flux after the soldering. In the components of the past flux used in the solder paste, however, the thixotropic agent suppressing sedimentation of the solder powder when the solder powder and the flux are mixed is not dissolved when heating it so that it has been impossible to realize no residue after the soldering.

For example, the thixotropic agent which has been previously used as antisettling additive contains hardened castor oil and fatty acid bisamide, which have any effects as the antisettling additive but do not dissolve by heating them to remain around the soldered portion as the residue of flux.

Further, higher fatty acid amide which is added to the flux as the thixotropic agent, as described in the Patent Document 1, has an excellent property for improving fluidity as a viscosity modifier and has an effect such that it dissolves when heating it to remain no residue thereof. However, it is short in effect as antisettling additive of the solder powder.

The present invention has an object to provide flux which has antisettling performance of the solder powder, dissolves by heating at the time of the soldering to remain no residue thereof and does not block any wettability of the solder.

### [MEANS FOR SOLVING THE PROBLEMS]

Inventors have paid attention to a polymer having a property for improving fluidity. They have found out a component thereof that has antisettling performance of the solder powder and dissolves by heating and a fact that by applying it to the flux, it is possible to realize no residue without blocking any solderability.

This invention relates to flux which is mixed with solder powder to produce the solder paste, the flux containing an amount of methacrylate polymer which suppresses sedimentation of the solder powder at a normal temperature range and dissolves or vaporizes during a heating course at the time of the soldering.

As the methacrylate polymer, polyalkyl methacrylate having an alkyl group is preferable and it is preferable that an addition amount of polyalkyl methacrylate is not less than 0.1 % through less than 1.0 %. It is to be noted that % is mass% unless otherwise specified. Further, it is preferable that a solvent having at least three OH groups is further contained.

### [EFFECTS OF THE INVENTION]

According to the flux of the present invention, when it is mixed with the solder powder to produce the solder paste, it is possible to suppress sedimentation of the solder powder. Any residue of flux does not remain because of its dissolution by heating at the time of the soldering so that it is also possible to realize no residue. Further, it does not block any solderability.

### [EMBODIMENTS FOR CARRYING OUT THE INVENTION]

The flux according to these embodiments is mixed with the solder powder to produce a solder paste. The flux according to these embodiments contains methacrylate polymer as thixotropic agent to suppress sedimentation of the solder powder. As the methacrylate polymer, polyalkyl methacrylate having an alkyl group is preferable. An alloy composition of the solder powder to be mixed is not specifically limited.

In the solder paste in which the flux to which polyalkyl methacrylate is added and the solder powder are mixed, sedimentation of the solder powder is suppressed at a normal temperature range such as room temperature and a separation of the solder powder and the flux is controlled.

Polyalkyl methacrylate dissolves at a heating temperature on the time of the soldering to vaporize. Thus, in the solder paste in which the flux to which polyalkyl methacrylate is added and the solder powder are mixed, polyalkyl methacrylate dissolves during a heating course at the time of the soldering in the reflow furnace so that the flux does not substantially remain after the soldering to realize no residue.

During a heating course at the time of the soldering, a period of time it takes for polyalkyl methacrylate to dissolve is changed on the basis of the addition amount of polyalkyl methacrylate. Accordingly, by taking into consideration the period of time it takes for polyalkyl methacrylate to dissolve during the heating course at the time of the soldering, an addition amount of polyalkyl methacrylate preferably is not less than 0.1 % through less than 1.0 %.

Further, it is preferable that the flux according to this embodiment, by taking wettability of the solder into consideration, contains a solvent having at least three OH groups. The addition of polyalkyl methacrylate suppresses sedimentation of the solder powder as described above. On the other hand, this does not block any wettability of the solder.

Thus, the flux according to this embodiment contains the polyalkyl methacrylate as the thixotropic agent which suppresses sedimentation of the solder powder when it is mixed with the solder powder and is pyrolyzed by heating at the time of the soldering. As other components of the flux, a solvent having at least three OH groups is contained.

The solder paste according to this embodiment is produced by mixing the above-mentioned flux and the solder powder. On a course of soldering using the solder paste according to this embodiment, good solder-ability and no residue are realized by replacement of inside of the reflow furnace by nitrogen at the time of heating.

### < Embodiments>

The flux of the embodiments and that of comparison examples, according to compositions shown in the following Tables, were prepared. Such flux of the embodiments and that of the comparison examples were used to prepare the solder paste. They were compared with each other on a relationship between an addition or no addition of polyalkyl methacrylate and the suppression of sedimentation of the solder powder. They were also compared with each other on any influence to the wettability by the addition of polyalkyl methacrylate. They were further compared with each other on a relationship between an addition amount of polyalkyl methacrylate and a residue.

### < Relationship between an Addition or no Addition of Polyalkyl Methacrylate and the Suppression of Sedimentation of the Solder Powder or Wettability>

The flux of the embodiment and that of the comparison examples, according to compositions shown in the following Table 1, were prepared. The solder paste was prepared so that the solder powder (Sn-3Ag-0.5Cu, Particle Size: 25-36 µm) became 89%.

**[Table 1]**

| | EMBODIMENT 1 | COMPARISON EXAMPLE 1 | COMPARISON EXAMPLE 2 |
|---|---|---|---|
| VOLATILE THICKENER | 30% | 30% | 30% |
| TRIMETHYLOL PROPAN | 30% | 30% | 30% |
| STEARIC ACID AMIDE | 10% | 10% | 10% |
| POLYALKYL METHACRYLATE | 0.10% | NO ADDITION | 0.10% |
| 1, 2, 6-HEXANTRIOL | 10% | 10% | NO ADDITION |
| 2-PHENOXYETHANOL | 19.85% | 20% | 29.90% |
| DIETHYL AMINE HYDROBROMIDE | 0.05% | NO ADDITION | NO ADDITION |

Here, polyalkyl methacrylate has a property as a viscosity modifier but, in this embodiment, is added with the object of antisettling. Volatile thickener is added in order to increase the viscosity of the solder paste but does not contribute to the suppression of sedimentation of the solder powder. Trimethylol propane has OH groups and is added as a viscosity modifier and an activator. Stearic acid amide is added as a viscosity modifier.

1, 2, 6-hexantriol has OH groups and is added as an activator and a solvent. 2-phenoxyethanol is added as a solvent. Diethyl amine hydrobromide is added as an activator.

### Test Method:

(1) Confirmation of suppression of sedimentation of the solder powder;
   The solder paste was left for 12 hours under a circumstance of 35 °C and sedimentation degree of the solder powder was confirmed.
(2) Confirmation of Reflow Performance;
   The solder paste was printed and applied to a board in which Ni was plated on a copper base, was heated in oxygen content atmosphere with 100 ppm or lower to fuse the solder for 60 seconds and was then cooled to be solidified. Residual degree of the residue of flux and a spread of the solder were confirmed with naked eye.

### Results:

(1) Confirmation of suppression of sedimentation of the solder powder;
   In the embodiment 1, there was no sign such that the solder powder was settled;
   In the comparison example 1, the solder powder was settled and the flux steeped from the paste surface; and
   In the comparison example 2, there was no sign such that the solder powder was settled.
(2) Confirmation of Reflow Performance;
   In the embodiment 1, no residue of flux remained. The solder covered whole surface of the Ni plating pattern;
   In the comparison example 1, no residue of flux remained. The solder was rejected on a part of the Ni plating pattern but indicated the wettability in 50% of an area of the pattern; and
   In the comparison example 2, no residue of flux remained. The solder was completely rejected on the Ni plating pattern and indicated the wettability in only 30% of an area of the pattern.

Based on the above results of the embodiment 1 and the comparison example 1, it is understood that by the addition of polyalkyl methacrylate, an effect of suppression of sedimentation of the solder powder is shown under a normal temperature. Based on the results of the embodiment 1 and the comparison example 2, it is understood that the addition of polyalkyl methacrylate does not block the wettability of the solder nor block the solderability. Further, based on the result of the embodiment 1, it is understood that the addition of 1, 2, 6-hexantriol having OH groups and the addition of a small amount of hydrohalogenic acid salt further improves the solderability.

### <Relationship between Addition Amount of Polyalkyl Methacrylate and Residue >

The flux of the embodiment and that of the comparison example, according to compositions shown in the following Table 2, were prepared. The solder paste was prepared so that the solder powder (Sn-3Ag-0.5Cu, Particle Size: 25-36 µm) became 89%.

**[Table 2]**

| | EMBODIMENT 2 | COMPARISON EXAMPLE 3 |
|---|---|---|
| VOLATILE THICKENER | 30% | 30% |
| TRIMETHYLOL PROPAN | 30% | 30% |
| STEARIC ACID AMIDE | 10% | 10% |
| POLYALKYL METHACRYLATE | 0.50% | 1.00% |
| 1, 2, 6-HEXANTRIOL | 10% | 10% |
| 2-PHENOXYETHANOL | 19.45% | 18.95% |
| DIETHYL AMINE HYDROBROMIDE | 0.05% | 0.05% |

### Test Method:

(1) Confirmation of suppression of sedimentation of the solder powder;
   The solder paste was left for 12 hours under a circumstance of 35 °C and sedimentation degree of the solder powder was confirmed.
(2) Confirmation of Reflow Performance;
   The solder paste was printed and applied to a board in which Ni was plated on a copper base, was heated in oxygen content atmosphere with 100 ppm or lower to fuse the solder for 60 seconds and was then cooled to be solidified. Residual degree of the residue of flux and a spread of the solder were confirmed with naked eye.

### Results:

(1) Confirmation of suppression of sedimentation of the solder powder;
   In the embodiment 2, there was no sign such that the solder powder was settled; and In the comparison example 3, there was no sign such that the solder powder was settled.
(2) Confirmation of Reflow Performance;
   In the embodiment 2, no residue of flux remained. The solder covered whole surface of the Ni plating pattern; and
   In the comparison example 3, white residue of flux was detected with naked eye. On the other hand, the solder covered whole surface of the Ni plating pattern. When reflowing a test piece three times, the white residue of flux then disappeared.

Based on the above results of the embodiments 1 and 2, it is understood that by the addition of about 0.1% through about 0.5% of polyalkyl methacrylate, an effect of suppression of sedimentation of the solder powder is shown under a normal temperature. Further, it is understood that no residue remains on the normal heating time when soldering in the reflow furnace.

On the other hand, based on the result of the comparison example 3, it is understood that if 1.0% or more of polyalkyl methacrylate is added, an effect of suppression of sedimentation of the solder powder is shown, but a period of time until no residue remain at the time of the reflow is extended. Since, in the actual board production, a period of time for the solder to fuse is about 60 seconds based on a heat-resisting property of the board or device, it does not meet any actual reflow conditions to extend a period of heating time with the object of realizing no residue.

Based on the above results, in order to show the effect of suppression of sedimentation of the solder powder by the addition of polyalkyl methacrylate to the flux and allow no residue to be realized at the time of the reflow, it is understood that not less than 0.1% through less than 1.0% of polyalkyl methacrylate is preferably added.

Thus, when a predetermined amount of polyalkyl methacrylate is added to the flux as the thixotropic agent, the effect of suppression of sedimentation of the solder powder is obtained at a normal temperature range, the wettability of the solder is not blocked at the time of soldering and after the soldering, no residue of flux remain.

Accordingly, it is possible to realize no residue without washing out the residue of flux after the soldering and when performing any resin coating, it is unnecessary to select resin coating materials and in a step of applying /curing the resin coating materials after the soldering, curing inhibition of the resin coating materials does not arise so that the reliability can be improved. Further, it is possible to omit a step of washing out the residue of flux after the soldering, which allows the steps of soldering to be improved.

Additionally, by realizing no residue, it also has an effect of decreasing mistakes in circuit tester (ICT) after the step of soldering.

Further, using polyalkyl methacrylate as the thixotropic agent allows to be obtained an effect of suppression of sedimentation of the solder powder to a high degree when mixing the solder powder and the flux so that it is not only possible to print and apply the solder paste but also possible to apply the solder paste by filling a syringe with it and discharging it or to apply it to use the ink-jet method.

It is to be noted that regarding the flux in which no residue is unnecessary, even if polyalkyl methacrylate more than the above addition amount thereof is added, it has both of an effect as a viscosity modifier and an effect of suppression of sedimentation of the solder powder so that for the flux in which no residue is unnecessary, the addition amount of polyalkyl methacrylate is not limited to the above-mentioned amount thereof.

### INDUSTRIAL APPLICABILITY

The flux according to this invention is applicable to a desired field for a good external appearance after the soldering, in addition to reliability because it can realize the effect of suppression of sedimentation of the solder powder and no residue after the soldering.

## Claims

1. Flux which is mixed with solder powder to produce solder paste, the flux comprising an amount of methacrylate polymer which suppresses of sedimentation of the solder powder at a normal temperature range and dissolves or vaporizes during a heating course at the time of the soldering.

2. The flux according to Claim 1 wherein the methacrylate polymer contains not less than 0.1 mass% through less than 1.0 mass% of polyalkyl methacrylate having an alkyl group.

3. The flux according to Claim 1 or 2, further comprising a solvent having at least three OH groups.
